# EUROPEAN PATENT APPLICATION

(11) **EP 4 678 355 A1**
(43) Date of publication of application: **14.01.2026**
(21) Application number: 23926638.0
(22) Date of filing: 13.12.2023
(51) Int. Cl.: B25J 15/08

(54) **GRIPPING DEVICE, AUTOMATIC ANALYSIS DEVICE, AND GRIPPING METHOD**

(30) Priority: 10.03.2023 JP 2023037516
(71) Applicant: HITACHI HIGH-TECH CORPORATION, Tokyo 105-6409 (JP)
(72) Inventor: SUENARI, Tsukasa, Tokyo 105-6409 (JP); YAMASHITA, Taichiro, Tokyo 105-6409 (JP); OKUSA, Takenori, Tokyo 105-6409 (JP)
(74) Representative: MERH-IP Matias Erny Reichl Hoffmann Patentanwälte PartG mbB
(86) International application number: PCT/JP2023/044583
(87) International publication number: WO 2024/190022

(57) **Abstract**

[Problem]

There are provided a gripper, an automatic analyzer, and a gripping method that are capable of improving gripping accuracy while intending a reduction in size compared with conventional mechanisms.

[Solution]

A gripper includes: a connection rod 23 that extends in a first direction; a first arm 20a that is pivotally supported at one end of the connection rod 23 and that extends in a second direction; a second arm 20b that is pivotally supported at the other end of the connection rod 23 on the opposite side where the first arm 20a is pivotally supported, and that extends in a third direction; a first gripping arm 25a that is rotatably formed about a first rocking bearing 19a and that extends in a fourth direction; and a second gripping arm 25b that is rotatably formed about a second rocking bearing 19b and that extends in a fifth direction. In the gripper, a straight line connecting the first rocking bearing 19a to the second rocking bearing 19b becomes parallel with the first direction, the second direction becomes parallel with the third direction, and the fourth direction and the fifth direction are in point symmetry to a vessel 8.

## Description

### Technical Field

The present invention relates to a gripper, an automatic analyzer, and a gripping method.

### Background Art

An electric gripper described in Patent Literature 1 is configured such that "an auxiliary arm is supported to be parallel to a main arm so as to be rotatable relative to a first arm part and a second arm part and that the first arm part and the second arm part can move closer to and away from each other while being maintained to be parallel to each other when the main arm is rotated by rotation of a motor shaft".

### Citation List

### Patent Literature

Patent Literature 1: Japanese Unexamined Patent Application Publication No. 2016-55393

### Summary of Invention

### Technical Problem

An automatic analyzer is a device that automatically analyzes blood and other biological samples and outputs the results, and therefore is an essential device in hospitals and medical testing facilities. In the automatic analyzer, a wider variety of tests are required to be performed in a shorter time.

It is necessary to supply disposable consumable vessels in large quantities for mixing a sample such as blood with a reagent for analysis from outside, and then take out the vessels one by one and supply the vessels to the automatic analyzer. For example, a gripper that is small-seized and capable of gripping a vessel reliably and accurately and has a pair of opening and closing claws that sandwich and grip a vessel is required in order to grip and take out vessels one by one from a magazine on which many consumable vessels are densely placed close to each other, and in order to transport the vessels to the analyzer.

The gripper is required to be accurately positioned to grip the vessel, and to be downsized so that the gripper does not interfere with adjacent vessels placed closer to each other on the magazine during full opening.

In the configuration disclosed in Patent Literature 1, the first arm part and the second arm part can move closer to or away from each other while being maintained to be parallel to each other to hold or release a workpiece, but a workpiece gripping part that holds or releases the workpiece is extended along a side part of the motor and juxtaposed with the motor, and thus there is a limit in reducing a projected area of the motor and the workpiece holding part and downsizing.

The present invention provides a gripper, an automatic analyzer, and a gripping method that are capable of improving the accuracy of gripping while achieving downsizing, as compared to conventional mechanisms.

### Solution to Problem

The present invention includes a plurality of means for solving the above-described issues, but an example of the means includes a rod-shaped member extending in a first direction in a horizontal plane; a first arm that is pivotally supported at one end of the rod-shaped member and extends in a second direction different from the first direction in a horizontal plane; a second arm that is pivotally supported at another end of the rod-shaped member opposite to the end at which the first arm is pivotally supported, and that extends in a third direction different from the first direction in a horizontal plane; a first gripping part that is configured to be rotatable about a first site that is not connected to the rod-shaped member and is at one end of the first arm, and that extends in a fourth direction different from the second direction in a horizontal plane; a second gripping part that is configured to be rotatable about a second site that is not connected to the rod-shaped member and is at one end of the second arm, and that extends in a fifth direction different from the third direction in a horizontal plane, in which when the first gripping part and the second gripping part grip a target by sandwiching the target, or release the gripped target, the gripper operates such that a straight line connecting the first site and the second site is parallel to the first direction, the second direction is parallel to the third direction, and the fourth direction and the fifth direction are point-symmetric with respect to the object. Advantageous Effects of Invention

According to the present invention, it is possible to improve the accuracy of gripping while achieving downsizing, as compared to conventional mechanisms. Issues, configurations, and effects other than those described above will be apparent from the description of the following embodiments.

### Brief Description of Drawings

FIG. 1 is a diagram showing an outline of an automatic analyzer.
FIG. 2 is a perspective view of a gripper.
FIG. 3 is a cross-sectional view taken along arrow A-A in FIG. 2.
FIG. 4 is a cross-sectional view taken along arrow B-B in FIG. 2.
FIG. 5 is an exploded perspective view showing the configuration of a gripping part interlocking mechanism.
FIG. 6 shows cross-sectional views taken along arrow D-D in FIG. 5 ((a) shows a closed state, (b) shows a full-opened state, and (c) shows a state of gripping a vessel).
FIG. 7 shows cross-sectional views taken along arrow D-D in FIG. 5, which are line diagrams schematically showing the configuration of the gripping part interlocking mechanism ((a) shows a closed state, (b) shows a full-opened state, and (c) shows a state of gripping a vessel).
FIG. 8 is a cross-sectional view taken along arrow C-C in FIG. 4 ((a) shows a closed state and (b) shows a state of gripping a vessel).
FIG. 9 shows perspective views of a gripper ((a) shows a closed state and (b) shows a state of gripping a vessel).
FIG. 10 shows perspective views of a gripper viewed from another direction ((a) shows a closed state and (b) shows a state of gripping a vessel).
FIG. 11 is a perspective view showing a gripper and a magazine on which vessels are placed.
FIG. 12 shows schematic plane views showing positional relationships between the gripping claws of the gripper and vessels placed on the magazine ((a) shows a full-opened state, and (b) shows a state of gripping a vessel).

### Description of Embodiments

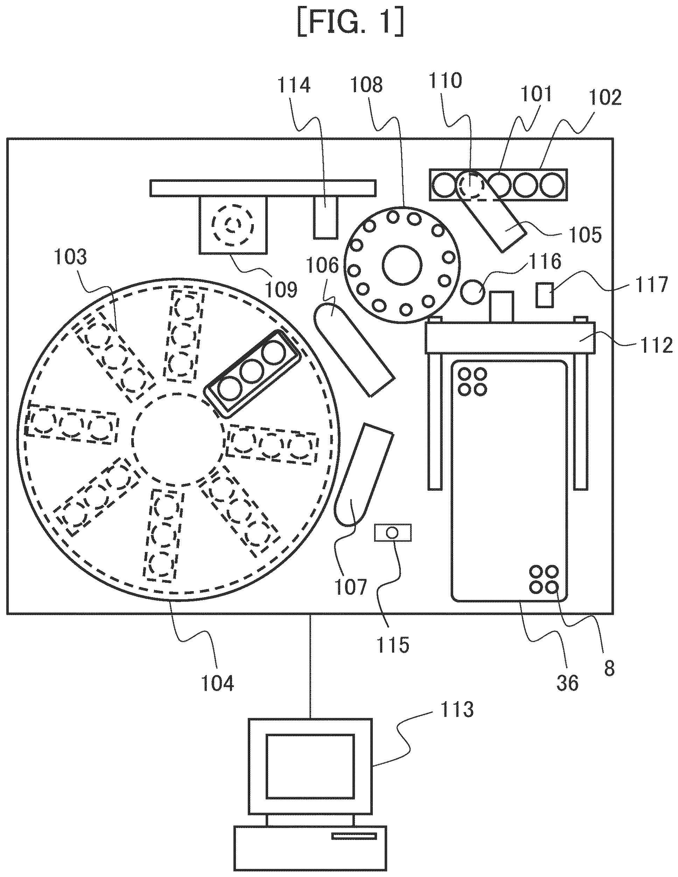

Embodiments of a gripper, an automatic analyzer, and a gripping method according to the present invention will be described with reference to Figs. 1 to 12. In the drawings used in the present description, identical or corresponding components are denoted by identical or similar reference signs, and repeated description of these components may be omitted.

In the following embodiments, a case where a gripper is disposed on a consumable item transport unit 112 of an automatic analyzer shown in Fig. 1 is described, but the gripper can be applied to a reaction vessel transport unit 114, other gripping mechanisms, or various mechanisms for holding an object.

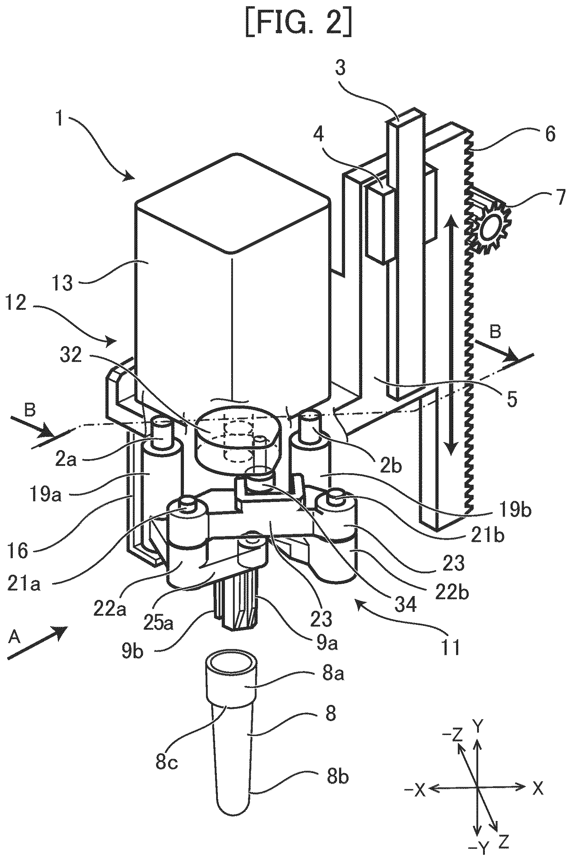

In addition, a case where a target to be gripped is various vessels to be used in the automatic analyzer, particularly, a cylindrical vessel 8 (see Fig. 2 and the like) with a bottom will be described, but the target object to be gripped is not limited to such a vessel.

An immunoassay analyzer, which is an example of the automatic analyzer, will be described below with reference to Fig. 1. Fig. 1 is a schematic configuration diagram of the immunoassay analyzer.

The immunoassay analyzer shown in Fig. 1 includes a sample transport unit 102 that transports, to a sample aspiration position 110, a sample vessel 101 such as a blood collection tube containing a sample to be analyzed, a reagent storage unit 104 that controls the temperature of a reagent contained in a reagent vessel 103 and to be used for analysis such that the temperature is within a certain range, a sample dispensing unit 105 that dispenses the sample contained in the sample vessel 101 into the reaction vessel, a reagent dispensing unit 106 that dispenses the reagent contained in the reagent vessel 103 into the reaction vessel, a stirring unit 107 that is open at the top and stirs particles and the like in liquid contained in the reagent vessel 103, a washing unit 115 that washes the stirring unit 107, a reaction promoting unit 108 in which the reaction vessel that contains reaction liquid obtained by mixing the sample and the reagent is set and that performs control such that the temperature of the reaction liquid is within a certain temperature range, a measurement unit 109 that optically measures an amount of a substance contained in the reaction liquid in which reaction has been promoted by the reaction promoting unit, an environmental temperature measurement sensor (not shown in the drawing) that measures the temperature of an environment in which the immunoassay analyzer is located, a controller 113 that controls an operation of each of the above-described units, and the like.

The sample transport unit 102 is a mechanism for transporting a sample rack on which one or a plurality of sample vessels 101 are placed to a target location. Instead of or in addition to the transport unit, a sample disk arranged around the circumference of a disk may be used. In a case where the sample rack is used, the sample rack is transported to an aspiration position of the sample dispensing unit by a transport device such as a transport belt mechanism or a robot arm.

The reagent storage unit 104 is rotated to transport any reagent vessel to a desired position while a plurality of reagent vessels 103 are located on the circumference. However, the reagent vessels may be located in a single row or in a plurality of rows in vertical and horizontal directions.

The measurement unit 109 optically or electrically measures the reaction liquid contained in the reaction vessel transported from the reaction promoting unit 108 by the reaction vessel transport unit 114. In this case, the reaction liquid in the flow passage is measured in a state in which the temperature of the reaction liquid is controlled to be in a certain temperature range. Examples of the measurement operation include measurement of the absorbance of the reaction liquid, measurement of the amount of light emitted when a reagent is added to the reaction liquid or a voltage is applied to the reaction liquid, measurement of the number of particles in the reaction liquid, or measurement of a fluctuation in a current value and a voltage value when the reaction liquid comes into contact with an electrode film. Therefore, in the measurement unit 109, photometric equipment such as a photomultiplier tube or a photometer, an imaging element such as a CCD, and an ammeter and a voltmeter that measure fluctuations in a current value and a voltage value are disposed.

The reaction promoting unit 108 maintains the temperature of the reaction vessel within a predetermined temperature range to cause the reaction to proceed stably. Specifically, the reaction promoting unit 108 is an incubator that controls the temperature by heating the surroundings with a heater or the like in a state in which a plurality of reaction vessels are located on the circumference. Another example of the reaction promoting unit 108 may be a constant temperature bath in which the reaction vessel is immersed in a bath in which a liquid of which the temperature is controlled to a certain temperature range is circulated.

The sample dispensing unit 105 dispenses the sample in the sample vessel 101 into the reaction vessel, but the effect of carryover between samples needs to be taken into consideration depending on analytical performance required for the analyzer. Therefore, when the sample dispensing unit 105 dispenses a sample, a replaceable dispensing tip is used for a part that comes into contact with the sample and an unused reaction vessel is used each time the sample is changed. In this case, the dispensing tip and the reaction vessel that were used once are discarded.

Therefore, a new dispensing tip and a new reaction vessel that are required to perform analysis for a certain period of time are stored in a magazine 36, and are supplied by the consumable item transport unit 112 to a location where they are to be used at appropriate time.

The consumable item transport unit 112 is configured to be movable in a planar direction and the vertical direction and configured to be movable above the magazine 36, the reaction promoting unit 108, a disposal hole 117, and a stirring unit 116.

The magazine 36 is configured to be attachable to and detachable from the immunoassay analyzer and is located on a top surface of the immunoassay analyzer by an operator in a state in which a plurality of vessels are located on the magazine.

Next, the configuration of the vessel gripper will be described with reference to Figs. 2 to 12.

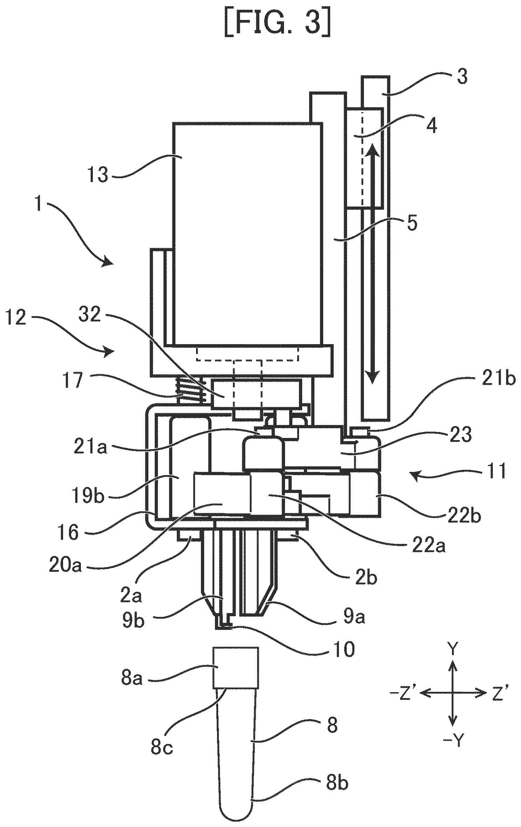

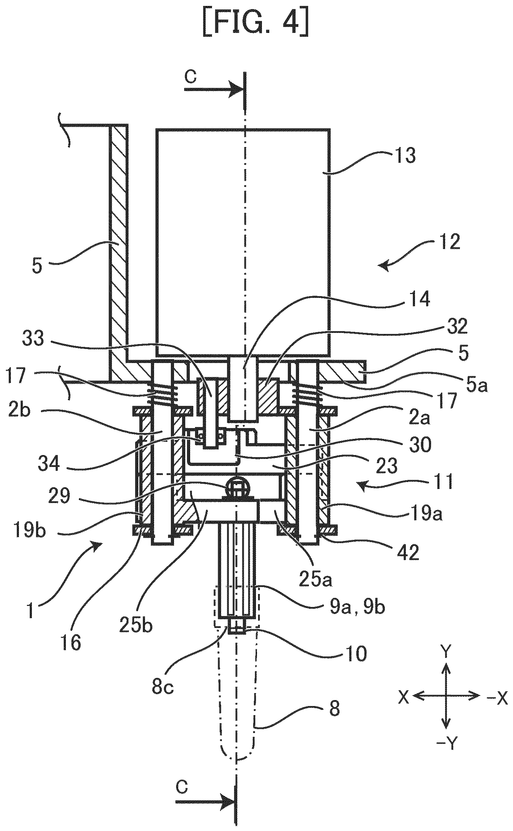

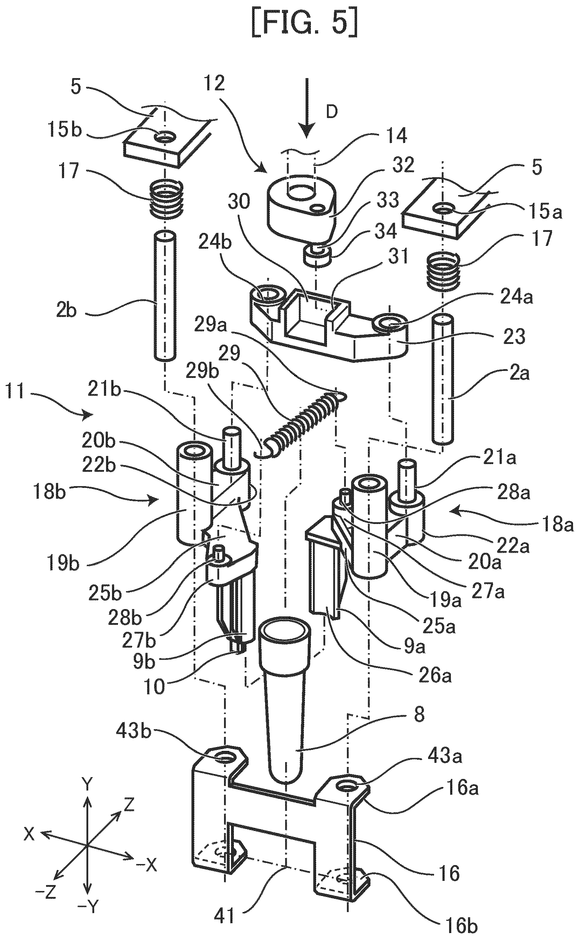

First, a basic configuration will be described with reference to Figs. 2 to 5. Fig. 2 is a perspective view showing an overall configuration of the gripper. Fig. 3 is a view taken in the direction of an arrow A and is a side view of the gripper. Fig. 4 is a sectional view taken in B-B direction in Fig. 2. Fig. 5 is an exploded perspective view showing a gripping part interlocking mechanism that interlocks a pair of gripping parts with each other to open and close the gripping parts in the gripper.

In addition, in the following description, in a plane including a pair of first rocking shaft 2a and second rocking shaft 2b of the gripper 1 that are parallel to each other and vertically extend, a direction orthogonal to a top-bottom (Y, -Y) direction is a left-right (X, -X) direction, and a direction orthogonal to both the top-bottom (Y, -Y) direction and the left-right (X, -X) direction is a front-rear (Z, -Z) direction.

As shown in Figs. 2 to 5, a rail 3 extending vertical in top-bottom direction is fixed to a frame (not shown). A preferred example of this frame is a configuration in which the gripper 1 is mounted on two slide rails which are orthogonal to each other such that the gripper 1 is capable of moving freely within a horizontal plane.

A direction in which the gripper moves on one of the two slide rails is a front'-rear' (Z', -Z') direction, and a direction in which the gripper moves on the other of the two slide rails is a left'-right' (X', -X') direction. That is, the gripper 1 is supported to be capable of moving in three XYZ axial directions and is driven by a drive mechanism having, for example, motors disposed for the respective axes.

The rail 3 is provided with a slider 4 capable of vertically moving along the rail 3. A base 5 that serves as a base component of the entire gripper 1 is attached to the slider 4.

A portion of the base 5 constitutes a rack 6 which is a linear gear which is parallel to the rail 3 and extends in the top-bottom direction. A rotatable pinion gear 7 engages with the rack 6. When the pinion gear 7 is rotated by a motor (not shown), the base 5 can move vertically along the rail 3 together with the slider 4 via the rack 6.

Next, a configuration of a gripping part will be described.

A first gripping part 9a and a second gripping part 9b that are a pair of gripping claws that can be opened and closed are provided at a lower end of the gripper 1 such that the gripping parts can grip and release the vessel 8 which is an object having an opening on its top surface and a bottomed cylindrical shape. The first gripping part 9a and the second gripping part 9b are main parts of the gripping part.

An example of the shape of the vessel 8 is a shape in which the outer diameter of a cylindrical part 8a having an opening on its top surface is the largest, and the outer diameter of a bottomed part 8b provided at the bottom of the cylindrical part 8a is less than that of the cylindrical part 8a, and a step 8c is provided at a boundary between the cylindrical part 8a and the bottomed part 8b.

The first gripping part 9a and the second gripping part 9b are configured to grip the outer circumference of the cylindrical part 8a located above the step 8c of the vessel 8. However, a portion of the second gripping part 9b extends below the step 8c, and the lower end of the part forms a hook part 10 that is a convex portion facing toward the center of the vessel 8. When the gripper 1 is moved upward in a state in which the first gripping part 9a and the second gripping part 9b grip the vessel 8, the hook part 10 engages with the step 8c to reliably lift the vessel 8 without causing the vessel 8 to fall.

In Figs. 2 and 3, the vessel 8 is moved and present at a position below the gripping part. In FIG. 4, the vessel 8 is present at a position where the vessel 8 is gripped.

The gripping part interlocking mechanism 11 for interlocking the first gripping part 9a and the second gripping part 9b with each other to open and close the gripping parts facing each other is disposed on upper parts of the first gripping part 9a and the second gripping part 9b. Further, a drive mechanism 12 for driving the gripping part interlocking mechanism 11 is disposed immediately on the gripping part interlocking mechanism 11. The drive mechanism 12 includes a motor 13 which is a power source. The motor 13 is provided with a rotary drive shaft 14 for outputting a driving force such that the rotary drive shaft faces vertically downward. The motor 13 is preferably a stepping motor, and it is possible to adjust an amount of opening of a first gripping arm 25a and a second gripping arm 25b by increasing or reducing the number of steps of driving the stepping motor.

Next, a configuration of the interlocking mechanism that operates in conjunction with the gripping part will be described.

A portion of the base 5 extends horizontally on an upward projected plane of the gripping part interlocking mechanism 11, has the motor 13 attached thereto from above, and is provided with a pair of rocking shaft holes 15a and 15b drilled in the vertical direction. A first rocking shaft 2a and a second rocking shaft 2b are fixed in the pair of rocking shaft holes 15a and 15b, respectively, so as to extend downward in parallel. The first rocking shaft 2a may be referred to as a first site, and the second rocking shaft 2b may be referred to as a second site.

Next, a positional relationship with the vessel 8 to be gripped will be described.

The first rocking shaft 2a and the second rocking shaft 2b are arranged parallel to the central axis of the vessel 8 and symmetrically with respect to the central axis of the vessel 8 in plan view. In other words, the vessel 8 is disposed at a middle point 41 of a straight line connecting the first rocking shaft 2a and the second rocking shaft 2b in plan view.

Next, a link frame will be described.

The link frame 16 has a substantially U shape as viewed in the left-right direction. A pair of upper and lower rocking shaft holes 43a and 43b through which the first rocking shaft 2a and the second rocking shaft 2b extend, respectively, is disposed on a U-shaped top surface 16a and a U-shaped under surface 16b of the link frame 16. The diameters of the rocking shaft holes 15a and 15b are slightly enlarged so as to provide a gap large enough to allow the first rocking shaft 2a and the second rocking shaft 2b to slide in the axial direction, respectively.

Except for portions around the rocking shaft holes 43a and 43b, the U-shaped top and under surfaces of the link frame 16 may be cut out to form notches, and thus the effect of reducing the weight of the part is obtained.

The lower ends of the first rocking shaft 2a and the second rocking shaft 2b extend through the under surface 16b of the link frame 16 and are prevented from coming off by a retaining ring 42.

In addition, a compressed spring 17 is disposed between the top surface 16a of the link frame 16 and an under surface 5a of the base, is coaxial with the first rocking shaft 2a and the second rocking shaft 2b, and biases the link frame 16 downward. When a force greater than a predetermined value is applied in an upward direction, the compressed spring 17 compresses and the link frame 16 is allowed to move upward.

Next, a configuration of a rocking arm will be described.

A first rocking member 18a that rotates about the first rocking shaft 2a is disposed around the first rocking shaft 2a. A second rocking member 18b that rotates about the second rocking shaft 2b is disposed around the second rocking shaft 2b.

The first rocking member 18a includes a cylindrical first rocking bearing 19a with an inner peripheral hole which is rotatably fitted to the first rocking shaft 2a with an appropriate gap therebetween. The first rocking bearing 19a is fixedly arranged in the top-bottom direction inside the U-shaped upper and lower sides of the link frame 16 with small gaps between them, and is configured so as not to prevent rotation about the first rocking shaft 2a.

The second rocking member 18b includes a cylindrical second rocking bearing 19b with an inner peripheral hole which is rotatably fitted to the second rocking shaft 2b with an appropriate gap therebetween. The second rocking bearing 19b is fixedly arranged in the top-bottom direction inside the U-shaped upper and lower sides of the link frame 16 with small gaps between them, and is configured so as not to prevent rotation about the second rocking shaft 2b.

Therefore, the relative positional relationship between the first rocking bearing 19a and the second rocking bearing 19b is fixed.

The first rocking member 18a further includes a first arm 20a extending substantially forward from the first rocking bearing 19a at one end. A first connection base portion 22a provided with a cylindrical first connection shaft 21a erected thereon is disposed at another end of the first arm 20a and is pivotally supported at one end of a connection rod 23.

In addition, the second rocking member 18b further includes a second arm 20b extending substantially forward from the second rocking bearing 19b at one end. A second connection base portion 22b provided with a cylindrical second connection shaft 21b erected thereon is disposed at another end of the second arm 20b, and is pivotally supported at another end of the connection rod 23 opposite to the end at which the first arm 20a is pivotally supported.

The length of the first arm 20a of the first rocking member 18a is equal to the length of the second arm 20b of the second rocking member 18b, and the direction (that may be referred to as a second direction) in which the first arm 20a extends is parallel to the direction (that may be referred to as a third direction) in which the second arm 20b extends.

Next, a parallel link will be described.

While a first connection bearing hole 24a is disposed on one end side of the connection rod 23 that is a rod-shaped member, a second connection bearing hole 24b is disposed on another end side that is another end of the connection rod 23. The first connection shaft 21a and the second connection shaft 21b are rotatably supported. The distance between the first connection bearing hole 24a and the second connection bearing hole 24b is equal to the distance between the rocking shaft holes 43a and 43b disposed in the link frame 16.

The distance between the first rocking shaft 2a and the second rocking shaft 2b is equal to the distance between the first connection bearing hole 24a and the second connection bearing hole 24b, and the length of the first arm 20a is equal to the length of the second arm 20b. Therefore, the link frame 16, the first arm 20a, the second arm 20b, and the connection rod 23 constitute a so-called "parallel link", and the first arm 20a and the second arm 20b rotate about the rocking shaft holes 43a and 43b, respectively, while being maintained to be parallel to each other. A direction connecting the one end and the other end of the connection rod 23, that is, a direction in which the connection rod 23 extends may be referred to as a first direction.

Next, the gripping part will be described in detail.

A portion of the above-described first rocking member 18a forms the first gripping arm 25a extending in a direction toward the vessel 8 and the connection rod 23, that is, a fourth direction different from the second direction as viewed in plan view, and is connected to an upper end of the first gripping part 9a.

In addition, the first rocking member 18a is configured to be rotatable about the first rocking bearing 19a that is not connected to the connection rod 23 and is at the one end of the first arm 20a. When the first rocking member 18a rotates about the first rocking bearing 19a, the first gripping part 9a moves toward or away from the vessel 8.

A surface of the first gripping part 9a facing the vessel 8 has a first recessed surface part 26a forming a portion of a cylindrical surface extending in the top-bottom direction. In a case where the diameter of the first recessed surface part 26a is less than the diameter of the cylindrical part of the vessel 8, when the first gripping part 9a comes into contact with the vessel 8, a ridgeline connecting both ends of the first recessed surface part 26a in the vertical direction comes into contact with the cylindrical surface of the vessel 8.

Similarly, a portion of the second rocking member 18b forms the second gripping arm 25b extending in a direction toward the vessel 8 and away from the connection rod 23 with respect to the vessel 8, that is, a fifth direction different from the third direction as viewed in plan view, and is connected to an upper end of the second gripping part 9b.

In addition, the second rocking member 18b is configured to be rotatable about the second rocking bearing 19b that is not connected to the connection rod 23 and is at the one end of the second arm 20b. When the second rocking member 18b rotates about the second rocking bearing 19b, the second gripping part 9b moves toward or away from the vessel 8.

A surface of the second gripping part 9b facing the vessel 8 has a second recessed surface part 26b forming a portion of the cylindrical surface extending in the top-bottom direction. In a case where the diameter of the second recessed surface part 26b is less than the diameter of the cylindrical part of the vessel 8, when the second gripping part 9b comes into contact with the vessel 8, a ridgeline connecting both ends of the second recessed surface part 26b in the vertical direction comes into contact with the cylindrical surface of the vessel 8.

The length of the first gripping arm 25a extending in the fourth direction is equal to the length of the second gripping arm 25b extending in the fifth direction. The first gripping arm 25a and the second gripping arm 25b are arranged point-symmetrically with respect to the vessel 8 in plan view. Therefore, the first gripping part 9a and the second gripping part 9b are arranged point-symmetrically with respect to the vessel 8. The vessel 8 is gripped at a middle point of the first rocking bearing 19a and the second rocking bearing 19b.

Further, when the first gripping part 9a and the second gripping part 9b grip the vessel 8, the ridgeline connecting both ends of the first recessed surface part 26a in vertical direction and the ridgeline connecting both ends of the second recessed surface part 26b in vertical direction are both arranged in contact with the cylindrical surface of the vessel 8.

In addition, the first gripping part 9a and the second gripping part 9b perform an interlocking opening and closing operation while facing each other and being point symmetric to each other, and can grip and release the vessel 8 at the position of the middle point 41 of the straight line connecting the first rocking shaft 2a and the second rocking shaft 2b in plan view.

Further, as described above, the hook part 10 is disposed at the lower end of the second gripping part 9b to hook the vessel 8 on the step 8c so as to prevent the vessel 8 from dropping during the gripping.

Next, a spring hook part will be described in detail.

A portion of the first gripping arm 25a forms a first spring receiving part 27a extending in a direction away from the vessel 8 with respect to the first gripping part 9a in plan view, and is provided with a first spring receiving shaft 28a extending upward.

A portion of the second gripping arm 25b forms a second spring receiving part 27b extending in a direction away from the vessel 8 with respect to the second gripping part 9b in plan view, and is provided with a second spring receiving shaft 28b extending upward.

The first spring receiving shaft 28a and the second spring receiving shaft 28b are arranged point-symmetrically with respect to the vessel 8. A straight line connecting the first spring receiving shaft 28a and the second spring receiving shaft 28b in plan view extends through the center axis of the vessel 8. The center of the vessel 8 is a middle point of the first spring receiving shaft 28a and the second spring receiving shaft 28b.

A pull spring 29 that is a bias member is installed between the first spring receiving shaft 28a and the second spring receiving shaft 28b. One end 29a of the pull spring 29 is hooked on the first spring receiving shaft 28a, and another end 29b of the pull spring 29 opposite to the one end 29a is hooked on the second spring receiving shaft 28b.

A biasing force generated by the pull spring 29 brings the first spring receiving shaft 28a and the second spring receiving shaft 28b closer to each other, and acts as a force in a direction in which the first gripping arm 25a and the second gripping arm 25b sandwich the vessel 8. That is, the biasing force of the pull spring 29 causes the first rocking member 18a and the second rocking member 18b to rotate about the first rocking shaft 2a and the second rocking shaft 2b via the first spring receiving shaft 28a and the second spring receiving shaft 28b, respectively, and causes the first gripping part 9a and the second gripping part 9b to become closer to each other and grip the vessel 8 with a predetermined force.

The first spring receiving shaft 28a that is at one end of the pull spring 29 hooked on the first spring receiving shaft integrated with the first gripping arm 25a and the second spring receiving shaft 28b that is at another end of the pull spring 29 hooked on the second spring receiving shaft integrated with the second gripping arm 25b are arranged point-symmetrically with respect to the vessel 8. Therefore, the biasing force of the pull spring 29 is applied symmetrically and equally to the first gripping part 9a and the second gripping part 9b, and the gripping force is applied symmetrically to the vessel 8, and thus the effect of stably gripping the vessel 8 is obtained. When the spring constant of the pull spring 29 is appropriately set, the force with which the vessel 8 is gripped can be set to an appropriate value, and situations in which the gripping force is insufficient or is excessively high can be reduced as much as possible.

In a case where the first gripping arm 25a and the first gripping part 9a are formed as an integral structure using a resin-molded product, the first rocking bearing 19a and the first spring receiving shaft 28a are also formed as an integral part. Further, in a case where the second gripping arm 25b and the second gripping part 9b are formed as an integral structure using a resin-molded product, the second rocking bearing 19b and the second spring receiving shaft 28b are also formed as an integral part. According to this configuration, it is possible to easily improve precision without an assembly error, and the cost can also be reduced by reducing the number of parts.

The gripping part interlocking mechanism 11 has the above-described configuration.

Next, a structure of a cam receiving part of the connection rod 23 will be described.

First, a configuration of the drive mechanism 12 that applies a driving force to the connection rod 23 to drive the gripping part interlocking mechanism 11 will be described.

As described above, in the present embodiment, the connection rod 23 constitutes the parallel link together with the link frame 16, the first arm 20a, and the second arm 20b.

As the drive mechanism that applies a driving force to the connection rod 23 and moves in a direction in which the first gripping arm 25a and the second gripping arm 25b release the gripped vessel 8, a rotary cam 34 and a cam receiving part 30 are provided in addition to the above-described motor 13.

The cam receiving part 30 is a concave portion of the connection rod 23 that is open on the side close to the vessel 8, is surrounded on three sides by walls that are approximately U-shaped in plan view, and is oriented orthogonal to the first direction.

One of walls included in the cam receiving part 30 and orthogonal to a straight line connecting the first connection bearing hole 24a and the second connection bearing hole 24b in plan view is referred to as a cam receiving surface 31. The cam receiving surface 31 is disposed on the side close to the first connection bearing hole 24a. When the cam receiving surface 31 is moved in a direction toward the first connection bearing hole 24a, the first gripping part 9a and the second gripping part 9b open in an interlocked manner against the biasing force of the pull spring 29 due to the action of the parallel link.

Next, the rotary cam 34 will be described.

An off-center member 32 that rotates together with the rotary drive shaft 14 is disposed at the lower end of the rotary drive shaft 14 of the motor 13 facing downward. A rotary cam shaft 33 is disposed on the off-center member 32 in a position parallel to the rotary drive shaft 14 and spaced apart from the rotary drive shaft 14 so as to face downward. The cylindrical rotary cam 34, which is, for example, a ball bearing, is disposed at the lower end of the rotary cam shaft 33 and is rotatably supported with respect to the rotary cam shaft 33.

When electric power is applied to the motor 13 to rotate the motor 13, the rotary drive shaft 14 rotates and the rotary cam 34 rotates together with the rotary drive shaft 14 in a state of being off-centered relative to the rotary drive shaft 14.

While the rotary drive shaft 14 rotates in a predetermined angle range, the rotary cam 34 comes into contact with the cam receiving surface 31 and the cylindrical outer peripheral surface of the rotary cam 34 pushes the cam receiving surface 31, thereby moving the connection rod 23.

When the connection rod 23 moves, the parallel link moves while the members, which face each other, are maintained to be parallel to each other. As a result, the first arm 20a and the second arm 20b synchronously rotate about the first rocking shaft 2a and the second rocking shaft 2b, respectively. The first gripping arm 25a and the second gripping arm 25b synchronously rotate while facing each other, and the first gripping part 9a and the second gripping part 9b move while facing each other, and thus are capable of gripping and releasing the vessel 8.

In the present embodiment, the rotary cam 34 moves away from the cam receiving part 30 to sandwich the vessel 8, and rotates at a predetermined angle together with the rotary drive shaft 14, moves in contact with the cam receiving part 30, thereby moving the connection rod 23 and opening the first gripping arm 25a and the second gripping arm 25b to release the vessel 8.

Next, the effect of disposing, on the connection rod 23, the cam receiving surface 31 on which the rotary cam 34 acts to drive the connection rod 23 will now be described.

A force in the normal direction is applied to the cam receiving surface 31 from the rotary cam 34, and this force becomes a driving force, causing a displacement to move the connection rod 23 in the first direction.

The displacement of the connection rod 23 is transmitted through the first connection shaft 21a to the first rocking member 18a rotatable about the first rocking shaft 2a, and moves the first gripping part 9a in an opening direction. That is, the displacement is transmitted through the two support shafts, which are the first connection shaft 21a and the first rocking shaft 2a, from the cam receiving surface to the first gripping part 9a.

In addition, the displacement of the connection rod 23 is transmitted through the second connection shaft 21b to the second rocking member 18b rotatable about the second rocking shaft 2b to move the second gripping part 9b in the opening direction. That is, the displacement is transmitted through the two support shafts, which are the second connection shaft 21b and the second rocking shaft 2b, from the cam receiving surface to the second gripping part 9b.

In order to allow each of the support shafts to rotate, gaps of, for example, about 0.05 mm are required between the support shafts and the support shaft receiving holes, which causes a loose fit. In a case where the number of support shafts present in a region from the cam receiving surface 31 to which the driving force and the displacement are applied to the first gripping part 9a that performs the opening and closing operation is equal to the number of support shafts present in a region from the cam receiving surface 31 to the second gripping part 9b, the effect of a loose fit occurring in the first gripping part 9a is equal to the effect of a loose fit occurring in the second gripping part 9b, and thus the first gripping part 9a and the second gripping part 9b can operate while being point-symmetric with respect to the vessel 8 even when a loose fit has occurred.

In the present embodiment, the number of support shafts in the region from the cam receiving surface 31 to the first gripping part 9a and the number of support shafts in the region from the cam receiving surface 31 to the second gripping part 9b are both equal to 2, and thus there is an effect in which the first gripping part 9a and the second gripping part 9b can operate while being point-symmetric and the position where the vessel 8 is gripped and the symmetry during the opening and closing operations are accurate, and stable gripping and releasing operations can be implemented.

Next, a modification of the cam receiving surface and its effect will be described below by taking as an example a case where the cam receiving surface is disposed on a member equivalent to the first rocking member 18a.

In this embodiment, the support shaft present in the region from the cam receiving surface to the first gripping part 9a is only one shaft, which is the first rocking shaft 2a. Meanwhile, the support shafts present in the region from the cam receiving surface to the second gripping part 9b are three shafts, which are the first connection shaft 21a, the second connection shaft 21b, and the second rocking shaft 2b. Therefore, the effect of a loose fit of the second gripping part 9b is greater than the effect of a loose fit of the first gripping part 9a.

Therefore, for example, when the opening operation is started from a state in which the vessel 8 is gripped, the first gripping part 9a with a small loose fit is first started to be opened and the second gripping part 9b with a large fit is opened with a delay. Since the vessel 8 receives a force in the horizontal direction from only the second gripping part 9b in a period of time from when the first gripping part 9a is first opened to when the second gripping part 9b is started to be opened, the vessel 8 tilts because the cylindrical part 8a near the upper end receives a rotating force acting around the horizontal axis.

It is considered desirable to add further ingenuity so that the first gripping part 9a and the second gripping part 9b are point-symmetric when the opening and closing operation is started in the above-described manner.

As is apparent from comparison with the above-described modification, as in the present embodiment, since the cam receiving surface 31 is disposed on the connection rod 23, the effect of securing the position where the vessel 8 is gripped and the symmetry of the opening and closing operation and stabilizing the accuracy of the position where the vessel 8 is gripped and the operation of gripping and releasing the vessel 8 is obtained.

Next, the arrangement relationship of the gripper in the vertical direction will be described.

The gripper 1 has a so-called stacked configuration including the first gripping part 9a and the second gripping part 9b that grip the vessel 8 at the bottom, the first gripping arm 25a and the second gripping arm 25b on their upper ends, the pull spring 29 on their upper parts, the connection rod 23 on its upper part, the rotary cam 34 on its upper part, the off-center member 32, and the motor 13 on their upper parts. Therefore, the parts overlap each other in plan view, the projected area is small, and the configuration is suitable for downsizing.

In other words, the first gripping part 9a, the second gripping part 9b, the first gripping arm 25a, the second gripping arm 25b, the pull spring 29, and the connection rod 23 constitute the gripping part interlocking mechanism 11, and the rotary cam 34, the off-center member 32, and the motor 13 constitute the drive mechanism 12.

Therefore, except for a part in which the rotary cam 34 and the connection rod 23 overlap in the top-bottom direction such that the rotary cam 34 acts on the connection rod 23, the drive mechanism 12 is disposed on the upper part of the gripping part interlocking mechanism 11 in an overlapping manner in the stacked configuration, the mechanisms overlap each other in plan view, the projected area is small, and the configuration is suitable for downsizing.

Next, the position of the motor 13 will be described.

The gripping part interlocking mechanism 11 and the drive mechanism 12 are generally disposed in an overlapping manner in the vertical direction by disposing the rotary drive shaft 14 of the motor 13 in a region surrounded by the rocking shaft holes 15a and 15b, the first connection bearing hole 24a, and the second connection bearing hole 24b, that is, inside a vertically projected plane of the parallel link constituted by the first rocking bearing 19a, the second rocking bearing 19b, the one end of the connection rod 23, and the other end of the connection rod 23. Since the projected area in the vertical direction can be reduced in the gripper 1 according to the embodiment by the above-described arrangement, the small-sized gripper 1 can be provided.

Next, the opening and closing operation of the gripper configured as described above will be described.

In the present embodiment, due to the configuration, when the first gripping arm 25a and the second gripping arm 25b grips the vessel 8 by sandwiching the vessel 8 or releases the gripped vessel 8, a straight line connecting the first rocking bearing 19a and the second rocking bearing 19b is parallel to the first direction, and the second direction is parallel to the third direction, and the fourth direction and the fifth direction are point-symmetric with respect to the vessel 8.

In addition, when the rotary cam 34 is not in contact with the cam receiving surface 31, the first gripping part 9a and the second gripping part 9b can move closer to each other and grip the vessel 8 while being point-symmetric with respect to the vessel 8 due to the biasing force generated in the pull spring 29. Further, when the vessel 8 is not present, the first gripping part 9a and the second gripping part 9b further move closer to each other, and a first stopper 35a disposed in the first gripping arm 25a and a second stopper 35b disposed in the second gripping arm 25b come into contact with each other and are stopped. This state is a so-called origin state.

When electric power is applied to the motor 13 and the motor 13 is rotated in a first direction, the rotary cam 34 comes into contact with the cam receiving surface 31, the connection rod 23 moves, the first gripping arm 25a and the second gripping arm 25b move in a direction away from the vessel 8 and release the vessel 8 while being point-symmetric.

When the motor 13 is rotated in a second direction opposite to the first direction, the connection rod 23 moves in the opposite direction, the rotary cam 34 moves away from the cam receiving surface 31, and it is possible to grip the vessel 8 due to the biasing force of the pull spring 29 or move to the origin if the vessel 8 is not present.

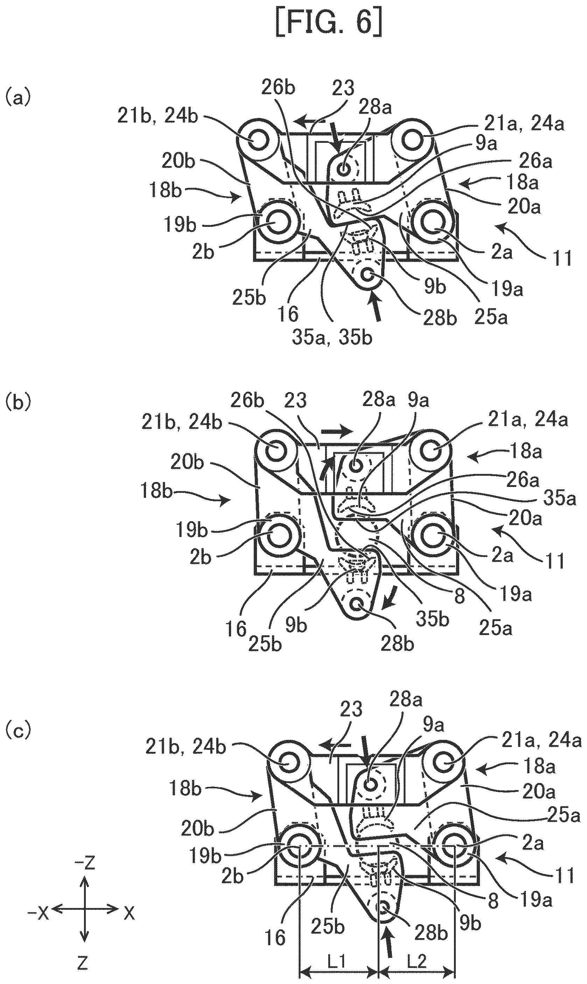

Next, an operation of gripping and releasing the vessel 8 by the gripper will be described in detail with reference to Figs. 6 to 10. Figs. 6 are top views, that is, views as viewed in the direction of an arrow D, for explanation of the operation of gripping and releasing the vessel 8 by the parallel link, which constitutes the gripping part interlocking mechanism 11 of the gripper 1 shown in Figs. 2 to 5, the first gripping part 9a, and the second gripping part 9b. To prevent complication of the drawing, the illustration is made while the pull spring 29 and the drive mechanism 12 are omitted. Fig. 6(a) shows full closing or the origin state, Fig. 6(b) shows full opening or a state in which the vessel 8 is released, and Fig. 6(c) shows a state in which the vessel is gripped.

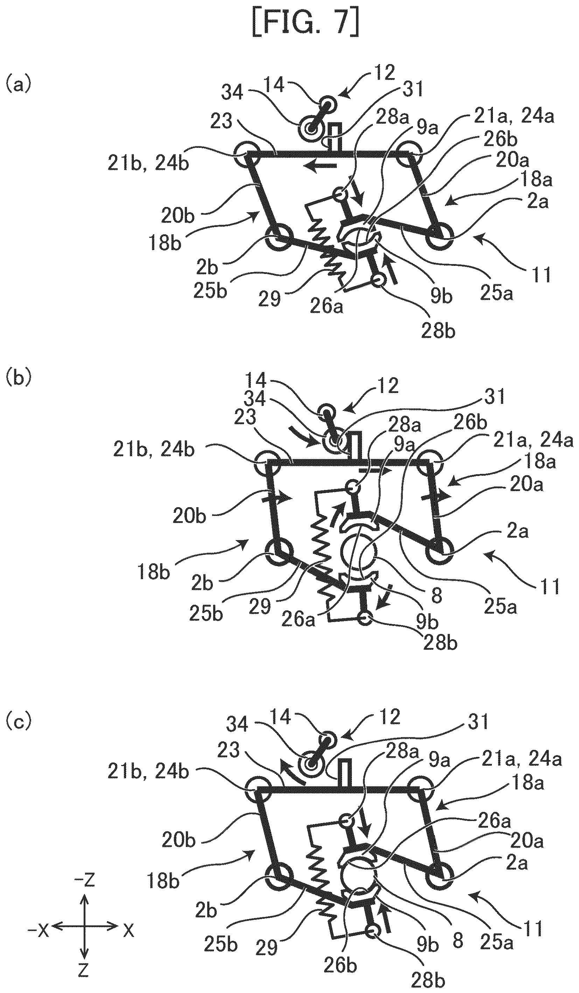

Figs. 7 are schematic plan views schematically showing the parallel link constituting the gripping part interlocking mechanism 11 shown in Figs. 6 and the drive mechanism 12 by using lines connecting rotary support shafts. As in Figs. 6, Fig. 7(a) shows the full closing or the origin state, Fig. 7(b) shows the full opening or the state in which the vessel 8 is released, and Fig. 7(c) shows the state in which the vessel is gripped. Figs. 7 schematically show the pull spring 29 at a shifted position such that the pull spring 29 does not overlap the first gripping part 9a, the second gripping part 9b, and the vessel 8 for ease of understanding. In addition, the rotary drive shaft 14 is shown such that the rotary drive shaft 14 is present at a position outside the parallel link instead of being inside the parallel link, and the cam receiving surface 31 is schematically shown such that the cam receiving surface 31 is present on the opposite side of the vessel 8 with respect to the connection rod 23 (rod-shaped member).

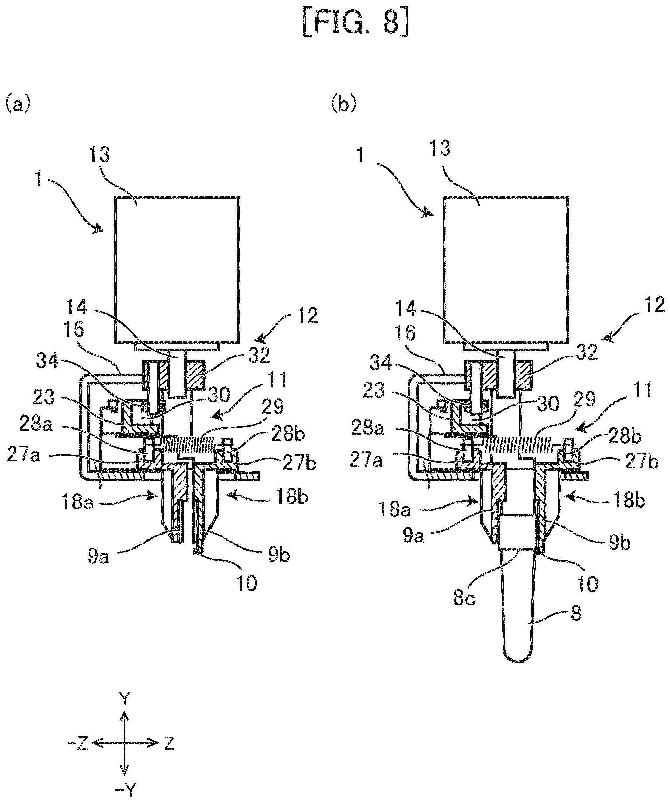

Figs. 8 are sectional views taken along C-C line in Fig. 4. Fig. 8(a) shows the full closing or the origin state, and Fig. 8(b) shows the state in which the vessel is gripped.

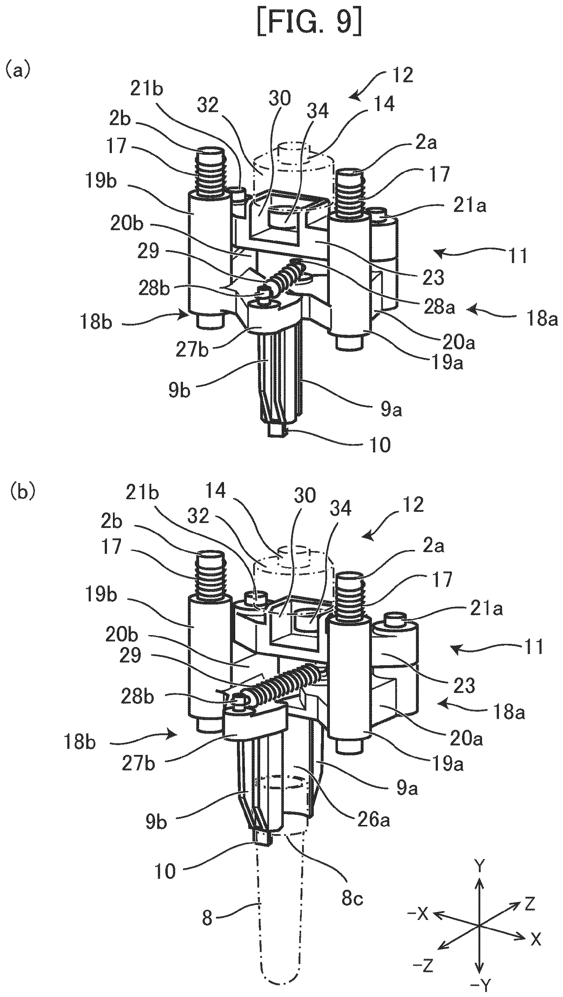

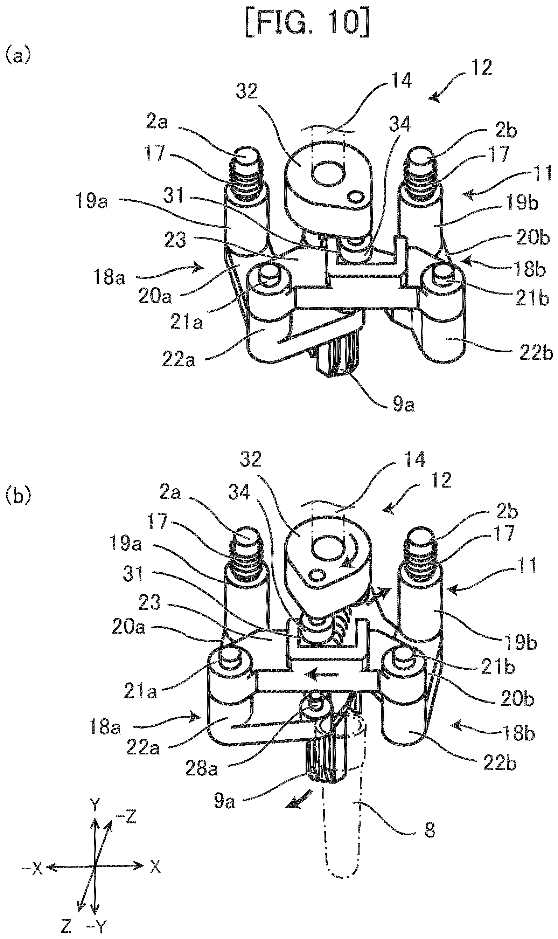

Figs. 9 and 10 are perspective views of the gripping part interlocking mechanism 11 and the drive mechanism 12. Figs. 9(a) and 10(a) show the full closing or the origin state, and Figs. 9(b) and 10(b) show the state in which the vessel is gripped. In Figs. 9 and 10, the illustration is made while the link frame 16 is omitted.

In the full closing state, that is, the origin state, in Figs. 6(a), 7(a), 8(a), 9(a), and 10(a), the first gripping part 9a and the second gripping part 9b do not grip the vessel 8, and the rotary cam 34 is at a position away from the cam receiving part 30. In this case, a force acting on the parallel link is only the biasing force of the pull spring 29, the first spring receiving shaft 28a and the second spring receiving shaft 28b are close to each other, the first stopper 35a disposed in the first rocking member 18a and the second stopper 35b disposed in the second rocking member 18b are in contact with each other, the state is the full closing state or the origin state. The rotary cam 34 is at a position away from the cam receiving part 30.

To proceed to the full opening state, the rotary drive shaft 14 is rotated in a counterclockwise direction in Figs. 7 from the above-described origin state, the rotary cam 34 is brought into contact with the cam receiving surface 31, the rotation of the motor 13 is continued, the movement of the rotary cam 34 causes the connection rod 23 to move in the right direction via the cam receiving surface 31, then the first rocking member 18a including the first gripping part 9a and the second rocking member 18b including the second gripping part 9b rotate about the first rocking shaft 2a and the second rocking shaft 2b by the same angle in the same direction, respectively, and the state becomes the full opening state shown in Figs. 6(b) and 7(b).

That is, since the first gripping part 9a and the second gripping part 9b are arranged point-symmetrically each other with respect to the vessel 8, the first gripping part 9a and the second gripping part 9b move in opposite directions by the same angle around the first rocking shaft 2a and the second rocking shaft 2b, respectively.

The amount of opening of the first gripping part 9a and the second gripping part 9b in the full opening state can be properly controlled based on the number of steps of driving in a case where the motor 13 is, for example, a stepping motor. The amount of opening is greater than the diameter of the vessel 8 to be gripped. Further, it goes without saying that the force transmitted from the motor 13 to the gripping part interlocking mechanism 11 to open the first gripping part 9a and the second gripping part 9b is greater than the biasing force generated by the pull spring 29.

In order for the gripper 1 to newly grip a vessel 8, the gripper 1 is moved to a position immediately above the vessel 8 to be gripped, the first gripping part 9a and the second gripping part 9b are set to be temporarily in the full opening state so as to open wider than the diameter of the vessel 8, the pinion gear 7 is rotated, and the gripper 1 is moved downward such that the hook part 10 at the lower end of the second gripping part 9b is positioned at a gripping height below the step 8c of the vessel 8. The motor 13 is rotated in a clockwise direction as illustrated in Fig. 7 such that the first gripping part 9a and the second gripping part 9b are moved in a closing direction, and the first gripping part 9a and the second gripping part 9b sandwich and grip the vessel 8 while facing each other.

When the rotary drive shaft 14 is rotated to move the rotary cam 34 away from the cam receiving surface 31, the first gripping part 9a and the second gripping part 9b grip the vessel 8 due to the biasing force of the pull spring 29, and become the gripping state shown in Figs. 6(c), 7(c), 8(b), 9(b), and 10(b). Since the vessel 8 is gripped at the middle point 41 of the first rocking shaft 2a and the second rocking shaft 2b, it is L1 = L2 in Fig. 6(c).

In the operation of releasing the gripped vessel 8, the pinion gear 7 is rotated upward and the gripper is moved upward to a predetermined height in a state in which the vessel 8 is gripped. The predetermined height is preferably a height where the gripped vessel 8 does not come into contact with other members and other vessels 8. The gripper 1 grips the vessel 8 at the predetermined height and is moved along the two slide rails, which extend in the front-rear direction and the left-right direction, to a position where the vessel 8 is to be released.

At the position where the vessel 8 is to be released, the pinion gear 7 is rotated downward to lower the gripper 1, the motor 13 is driven to rotate the rotary drive shaft 14 and move the connection rod 23 via the rotary cam 34 and the cam receiving part 30 to the full opening position shown in Figs. 6(b) and 7(b), and then the gripped vessel 8 can be released. That is, the first gripping part 9a and the second gripping part 9b can perform the opening and closing operation to grip and release the vessel 8.

If the gripper 1 abnormally move downward, for example, does not move downward during the downward movement due to contact of the first gripping part 9a, the second gripping part 9b, or the vessel 8 with a foreign object and the like, the gripping part interlocking mechanism 11 including the parallel link stops moving downward together with the link frame 16.

In this case, the entire gripper 1 continues to move downward, the gripper 1 moves downward along the first rocking shaft 2a and the second rocking shaft 2b while compressing the compressed spring 17 and the distance between the link frame 16 and the base 5 is reduced. When the reduction in the distance is detected by a detection mechanism (not shown) disposed between the link frame 16 and the base 5, it is possible to detect that the vessel 8 has come into contact with a foreign object, for example. Examples of the detection mechanism include an optical transmission sensor, a distance sensor, and a microswitch.

The gripper 1 can take out vessels 8 one by one from a state in which a large number of vessels 8 that are consumable items into which, for example, a sample and a reagent are to be dispensed are placed on the magazine to be supplied to the analyzer, and can be used to transport the vessels into the analyzer.

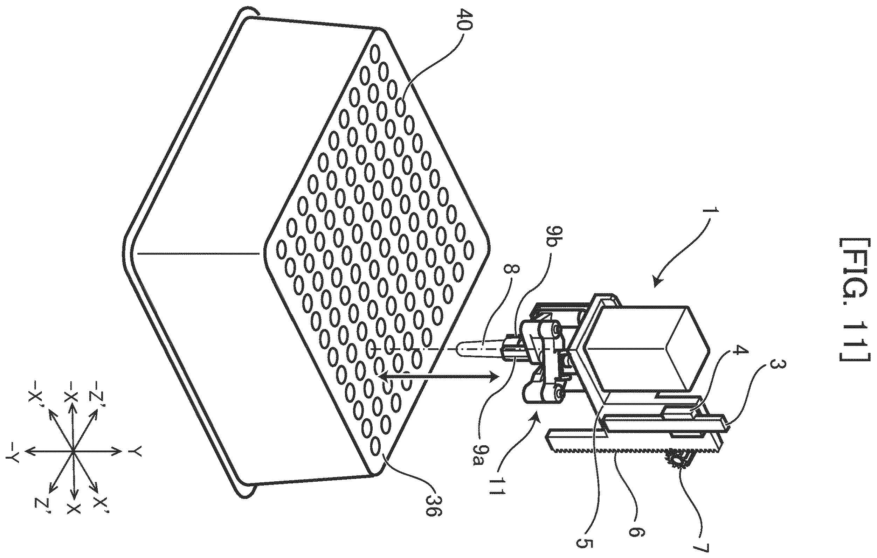

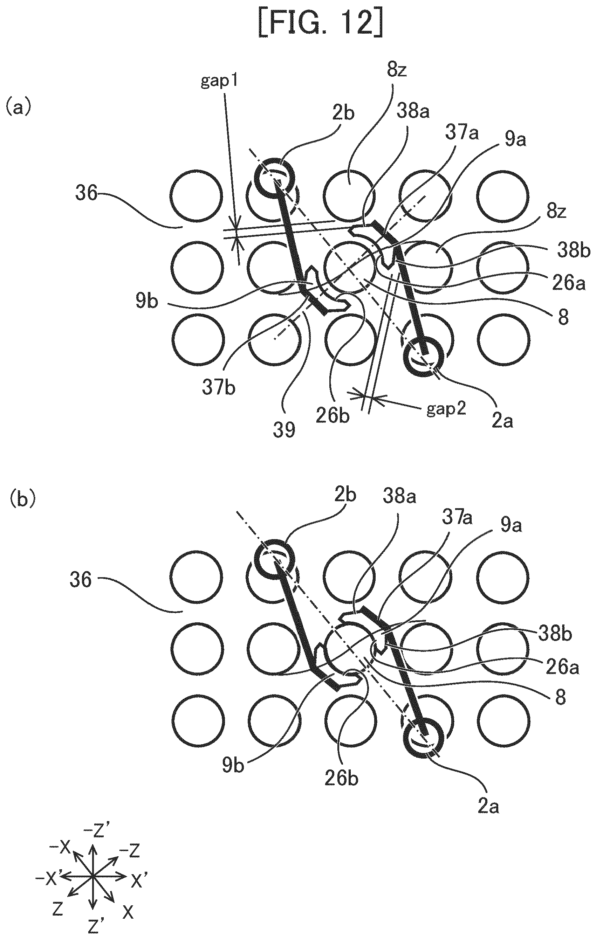

A preferred example of the shapes and movement directions of the first gripping part 9a and the second gripping part 9b which are suitable to take out the vessels 8 from the magazine will be described with reference to Figs. 11 and 12.

Fig. 11 shows the magazine 36 on which the vessels 8 that are consumable items are inserted in vessel insertion holes 40 arranged vertically and horizontally in a grid pattern and close to each other at equal intervals on a horizontal top surface which is an X-Z plane, and a state in which the gripper 1 is moved to a predetermined position above the magazine 36 in order to grip one of the vessels 8 placed on the magazine 36.

As an example, the magazine 36 is arranged along the front'-rear' (Z', -Z') direction, which is the arrangement direction of the two slide rails disposed orthogonal to each other, and the left'-right' (X', -X') direction in which the gripper moves along the other slide rail such that the gripper 1 can move in the horizontal plane.

At this predetermined position, the first gripping part 9a and the second gripping part 9b are set to the full opening state and moved downward to the gripping height, and the first gripping part 9a and the second gripping part 9b are closed to grip the vessel 8 and are moved upward, and thereafter moved into the analyzer in which the subsequent processing is performed.

Since the vessels 8 are placed close to each other in a grid pattern on the top surface of the magazine 36, the positions and shapes of the first gripping part 9a and the second gripping part 9b and the amount of opening of the first gripping part 9a and the second gripping part 9b during the full opening when the first gripping part 9a and the second gripping part 9b are set to the full opening state and moved downward are determined to ensure predetermined gaps between the first gripping part 9a, the second gripping part 9b, and adjacent vessels 8z.

Figs. 12 are schematic diagrams showing the positional relationship between the vessels 8 arranged in a grid pattern on the top surface of the magazine 36, and the first gripping part 9a and the second gripping part 9b which grip a predetermined vessel 8. In this case, only a gap between the first gripping part 9a and the second rocking shaft 2a and a gap between the second gripping part 9b and the second rocking shaft 2b are shown in a similar manner to the lines illustrated in Figs. 7. As an example, the vessels 8 arranged in the grid pattern are arranged at equal intervals in the left-right direction and the front-rear direction.

Fig. 12(a) shows the full opening state corresponding to Fig. 6(b) or Fig. 7(b), and Fig. 12(b) shows the gripping state corresponding to Fig. 6(c) or Fig. 7(c).

In the full opening state shown in Fig. 12(a), the first gripping part 9a and the second gripping part 9b are opened to be at predetermined positions while being point-symmetric with respect to the vessel 8 to be gripped. In this state, the first gripping part 9a and the second gripping part 9b are moved downward from above, the first recessed surface part 26a of the first gripping part 9a and the second recessed surface part 26b of the second gripping part 9b that face the cylindrical part 8a of the vessel 8 in plan view are moved downward to positions where the gripping parts are adjacent to the cylindrical part 8a and can grip the vessel 8, while maintaining the full opening positions where gaps between the recessed surface parts and the cylindrical part 8a of the vessel 8 occur, and the first gripping part 9a and the second gripping part 9b are prepared for the gripping operation of closing the first gripping part 9a and the second gripping part 9b.

Since the first gripping part 9a and the second gripping part 9b are point-symmetric, the shape of the first gripping part 9a will be described below in detail. Details of the second gripping part 9b can be understood by replacing "a" of the first gripping part 9a with "b".

The first gripping arm 25a of the first gripping part 9a includes the first recessed surface part 26a facing the outer cylindrical part of the selected vessel 8 in plan view, a first gripping part back face 37a on the side far from the first recessed surface part 26a with respect to the selected vessel 8, and the pair of first gripping part side surface 38a and second gripping part side surface 38b that connect the first recessed surface part 26a and the first gripping part back face 37a.

A preferred shape of the first gripping part 9a is desirably a substantially trapezoidal shape that includes a tapered side surface and in which the width of the first gripping part back face 37a is narrower than the first recessed surface part 26a in plan view and in which the farther away from the vessel 8, the narrower the width of the first gripping part 9a is.

The first gripping part back face 37a may be provided with a rib as a reinforcement material in the top-bottom direction, as long as the first gripping part back face 37a does not come into contact with adjacent vessels 8z.

Since the first gripping part 9a and the second gripping part 9b are moved downward while maintaining the full opening state, the first gripping part side surface 38a and the second gripping part side surface 38b move closer to the cylindrical parts 8a of the adjacent vessels 8z and 8z adjacent to the vessel 8 to be gripped on the magazine 36. Predetermined gaps gap1 and gap2 between the first gripping part side surface 38a, the second gripping part side surface 38b, and the cylindrical parts 8a of the adjacent vessels 8z and 8z occur.

In a state in which the first gripping arm 25a and the second gripping arm 25b are fully opened, the first gripping part 9a and the second gripping part 9b are located such that the first gripping part side surface 38a and the second gripping part side surface 38b are symmetric with respect to a direction of 45° with respect to the X axis and the Y axis from the position of the center axis of the vessel 8 selected from among the vessels 8 arranged adjacent to each other in the grid pattern, that is, a straight line 39 extending in an upper right and lower left direction with respect to the vessel 8 which is a target object, and that the center axes of the first recessed surface part 26a and the second recessed surface part 26b are located on the symmetric straight line extending in the direction of 45°.

Therefore, the first gripping part side surface 38a and the second gripping part side surface 38b can have the same gaps gap1 = gap2 with the adjacent vessels 8z and 8z, and are not biased to one side, and thus the gaps are maximum and preferable.

Since the second gripping part 9b is point symmetric to the first gripping part 9a, the second gripping part 9b acts on the vessel 8 in the same manner as the first gripping part 9a. Since the second gripping part 9b can have gaps gap1 = gap2 with vessels 8 in the same manner as the first gripping part 9a, and thus the gaps are preferable.

The first rocking shaft 2a and the second rocking shaft 2b are disposed in accordance with suitable positions of the first gripping part 9a and the second gripping part 9b.

It can be said that, according to the arrangement, even when only one vessel 8 is gripped and taken out from the top surface of the magazine 36 on which many vessels 8 are densely placed close to each other, it is possible to secure predetermined gaps with adjacent vessels 8z, and thus the configuration is more suitable for downsizing.

After the gripper 1 is moved downward, the motor 13 is driven to perform the gripping operation of closing the first gripping part 9a and the second gripping part 9b via the rotary cam 34 and grip the vessel 8. Thereafter, the gripper 1 is moved upward to lift the gripped vessel 8, and is moved horizontally toward the reaction promotion unit 108 and the vessel is supplied. Alternatively, it is also possible to move the vessel 8 from the analyzer to above the magazine 36 and then lower the vessel to place the vessel on the magazine 36.

One more function of the gripper is to transport the vessel 8 completely analyzed to a disposal hole 117 that is an opening disposed at a predetermined location in the analyzer, and drop the vessel 8 from the disposal port into a waste vessel storage box (not shown).

As described above, since a sample or the like may remain in the vessel 8 completely analyzed, control needs to be stably performed such that the vessel 8 is not vibrated and the orientation of the vessel is not drastically changed when the vessel is dropped from the disposal port.

That is, when the gripping parts gripping the vessel 8 perform an opening operation on the vessel asymmetrically at a high speed, for example, the first gripping part 9a may be moved away from the vessel first and the second gripping part 9b may start the opening operation with a delay, as a result, the second gripping part 9b may push the upper end of the vessel 8 and apply a force in the horizontal direction, and the vessel 8 may significantly tilt at the start of the dropping due to the light weight of the vessel 8.

Alternatively, air may rapidly flow into a gap that occurs when the first gripping part 9a or the second gripping part 9b is moved away from the vessel 8 at a high speed, and a fluid force may act asymmetrically on the vessel 8, causing the vessel 8 to tilt.

In the gripper, the first gripping part 9a and the second gripping part 9b that grip the vessel 8 operate in conjunction with each other, and are point-symmetric with respect to the vessel 8 even during the gripping of the vessel 8 and during the opening and closing operation, and thus when the first gripping part 9a and the second gripping part 9b starts releasing the vessel 8 from a state of gripping the vessel 8, the first gripping part 9a and the second gripping part 9b move point-symmetrically from the vessel 8 at the same speed and by the same displacement, and thus can perform the stable opening and closing operation without operating asymmetrically.

In addition, since a stepping motor, for example, that can operate at a low speed is used as an actuator instead of a solenoid that operates at a high speed, it is possible to perform the opening operation at a low speed. Therefore, since an impact force does not occur when the gripping parts start opening, and the gripping parts do not operate asymmetrically, it is possible to stably grip and release the vessel 8, and the gripper that can perform a stable operation and is highly reliable can be provided.

Further, in a case where the motor 13, for example, is a stepping motor, the amount of opening of the first gripping part 9a and the second gripping part 9b in the full opening state can be appropriately controlled based on the number of steps of driving.

Next, effects of the present embodiment will be described.

The above-described gripper 1 includes: the connection rod 23 that extends in a first direction in a horizontal plane; the first arm 20a that is pivotally supported at one end of the connection rod 23 and extends in a second direction different from the first direction in a horizontal plane; the second arm 20b that is pivotally supported at the other end of the connection rod 23 opposite to the end at which the first arm 20a of the connection rod 23 is pivotally supported, and that extends in a third direction different from the first direction in a horizontal plane; the first gripping arm 25a that is rotatable about the first rocking bearing 19a that is not connected to the connection rod 23 and is at one end of the first arm 20a, and that extends in a fourth direction different from the second direction in a horizontal plane; and the second gripping arm 25b that is rotatable about the second rocking bearing 19b that is not connected to the connection rod 23 and is at one end of the second arm 20b, and that extends in a fifth direction different from the third direction in a horizontal plane. When the first gripping arm 25a and the second gripping arm 25b grip a vessel 8 by sandwiching the vessel 8 or releases the gripped vessel 8, a straight line connecting the first rocking bearing 19a to the second rocking bearing 19b becomes parallel to the first direction, the second direction becomes parallel to the third direction, and the fourth direction and the fifth direction become point-symmetric with respect to the vessel 8.

For example, to drop and accumulate a used consumable vessel into the waste vessel storage box through the disposal port, it is required to release the vessel from the gripper in a straight and stable orientation without tilting the vessel to prevent a sample remaining in the vessel from scattering.

To achieve this, it is desirable that the pair of opening and closing claws always operate together to open and close evenly and symmetrically throughout the entire range of their opening and closing operation of the opening and closing claws, that a force applied to the pair of opening and closing claws at the time of gripping is even and the gripping force is applied symmetrically to the vessel, and further that the opening operation of the pair of gripping claws is symmetric with respect to the vessel and that the opening operation is not performed at an excessively high speed.

In addition, when a predetermined vessel is selected from among consumable vessels arranged close to each other in a grid pattern on the magazine from which consumable vessels are to be supplied, and is gripped, it is desirable to have predetermined gaps between the gripping claws and adjacent vessels such that the gripping claws in an opening state do not interfere with the adjacent vessels when the claws are first lowered to the height position of the vessel. To achieve this, a configuration that has a small projected area in plan view and can be made compact is desirable.

In the present embodiment, as described above, the link frame 16, the first arm 20a, the second arm 20b, and the connection rod 23 constitute the so-called "parallel link", the first arm 20a and the second arm 20b are configured to rotate about the rocking shaft holes 15a and 15b while being maintained to be parallel to each other, the first gripping part 9a and the second gripping part 9b can perform the interlocking opening and closing operation while facing each other, and the gripper can be prevented from being large. Therefore, the gripper that is stable, has a small projected area, and is highly reliable can be provided since the pair of gripping parts always interoperate with each other.

Further, since the first gripping part 9a and the second gripping part 9b that grip the vessel 8 are arranged to rotate point-symmetrically with respect to the vessel 8, and thus grip and release the vessel 8 symmetrically, imbalance caused by asymmetry is minimized, and a stable operation is possible. Therefore, the reliable gripper in which the accuracy of the position where a target object to be gripped is gripped is high and a releasing operation can be stabilized can be provided.

In addition, the vessel 8 is gripped at the middle point of the first rocking bearing 19a and the second rocking bearing 19b, and thus more stable gripping and releasing operations can be implemented.

Further, the relative positional relationship between the first rocking bearing 19a and the second rocking bearing 19b is fixed, the stability of the parallel link can be improved, and thus the stability of the gripping mechanism can be improved.

In addition, the biasing member that applies a biasing force in a direction in which the first gripping arm 25a and the second gripping arm 25b sandwich the vessel 8, and the drive mechanism that applies a driving force to be transmitted in a direction in which the first gripping arm 25a and the second gripping arm 25b release the gripped vessel 8 are further provided. The drive mechanism applies the driving force to the connection rod 23 and thus can symmetrically apply, to the connection rod 23, an opening driving force for opening the first gripping arm 25a and the second gripping arm 25b, and the stability during the gripping operation can be improved.

Further, the biasing member is the pull spring 29, the one end of the pull spring 29 hung on the first spring receiving shaft provided integrally with the first gripping arm 25a, and the other end of the pull spring 29 hung on the second spring receiving shaft provided integrally with the second gripping arm 25b are hung while being point-symmetric with respect to the vessel 8. The biasing force of the pull spring 29 is applied evenly and symmetrically to the first gripping part 9a and the second gripping part 9b. Therefore, the gripping force is applied symmetrically to the vessel 8, and the vessel 8 can be more stably gripped. Further, since the gripping force is applied by the pull spring 29, an optimum gripping force can be applied to the vessel 8 by appropriately selecting a spring constant.

In addition, the drive mechanism includes the motor 13 including the rotary drive shaft 14, the rotary cam 34 that rotates together with the rotary drive shaft 14 provided parallel to and off-centered relative to the rotary drive shaft 14, and the cam receiving part 30 disposed on the connection rod 23 and oriented in a direction orthogonal to the first direction. When the vessel 8 is to be sandwiched, the rotary cam 34 is moved away from the cam receiving part 30. When the vessel 8 is to be released, the rotary cam 34 rotates at a predetermined angle together with the rotary drive shaft 14, and moves in contact with the cam receiving part 30, thereby moving the connection rod 23 and opening the first gripping arm 25a and the second gripping arm 25b. Thus, the effect of a loose fit of the support shafts of the parallel link can be symmetrical. Therefore, the position where the vessel 8 is gripped and the symmetry of the opening and closing operation can be secured, and the accuracy of the position where the vessel 8 is gripped and the stability of the gripping and releasing operations can be achieved.

Further, since the rotary drive shaft 14 for the motor 13 is disposed in the vertical direction, and the rotary drive shaft 14 is disposed in a range defined by projecting, in the vertical direction, a region surrounded by the first rocking bearing 19a, the second rocking bearing 19b, the one end of the connection rod 23, and the other end of the connection rod 23, the motor 13 can be disposed above the parallel link in an overlapping manner, and thus the projected area can be further reduced.

In addition, since the gripper has a stacked configuration in which the first gripping arm 25a, the second gripping arm 25b, the pull spring 29, the connection rod 23, the rotary cam 34, and the motor 13 are stacked in this order from the bottom to the top in the vertical direction and in which the drive mechanism 12 is disposed on the upper part of the gripping part interlocking mechanism 11 in an overlapping manner, they overlap each other in plan view, the projected area is small, and the gripper has a structure suitable for downsizing.

Further, since the motor 13 is a stepping motor, and the amount of opening of the first gripping arm 25a and the second gripping arm 25b can be adjusted by increasing and reducing the number of steps of driving the stepping motor, the amount of opening can be finely adjusted, it is possible to increase a variety of gripping operations, and it is possible to support various gripping operations.

In addition, each of the vessels 8 is formed in a cylindrical shape with a bottom, and the gripper is provided with the first gripping arm 25a and the second gripping arm 25b that are capable of gripping and releasing a vessel 8 selected from among the plurality of vessels 8 placed on the magazine 36 vertically holding the plurality of vessels 8 placed in a grid pattern in the X axis direction and the Y axis direction on a horizontal plane. The first gripping arm 25a and the second gripping arm 25b include the first recessed surface part 26a and the second recessed surface part 26b that face the outer circumferential cylindrical part of the selected vessel 8 in plan view, the first gripping part back face 37a and a second gripping part back face 37b located on the side far from the first recessed surface part 26a and the second recessed surface part 26b with respect to the selected vessel 8, and the first gripping part side surface 38a and the second gripping part side surface 38b that form a pair and connect the first recessed surface part 26a and the second recessed surface part 26b to the first gripping part back face 37a and the second gripping part back face 37b, respectively. Widths of the first gripping part back face 37a and the second gripping part back face 37b are less than widths of the first recessed surface part 26a and the second recessed surface part 26b. The first gripping part side surface 38a and the second gripping part side surface 38b form the pair and have a substantially trapezoidal shape in which the widths of the first gripping part side surface 38a and the second gripping part side surface 38b become narrower as the gripping part side surface 38a and the second gripping part side surface 38b are farther away from the vessel 8. When the first gripping arm 25a and the second gripping arm 25b are opened, the central axes of the first recessed surface part 26a and the second recessed surface part 26b are located on a symmetric straight line in a direction of 45° from the central axis of the selected vessel 8 relative to the X axis and the Y axis, the pair of first gripping part side surface 38a and second gripping part side surface 38b are positioned symmetrically with respect to the symmetric straight line, and predetermined gaps occur between the selected vessel 8 and multiple adjacent vessels 8. Even when only one vessel 8 is gripped and taken out from the top surface of the magazine 36 on which a large number of vessels 8 are densely arranged close to each other in a grid pattern, gaps can be secured between the adjacent vessels 8z, and therefore the gripper 1 can be provided with improved reliability.

### <Others>

Note that the present invention is not limited to the above-described embodiments and various modifications and applications are possible. The above-described embodiments have been described in detail in order to facilitate the understanding of the present invention, and the present invention is not necessarily limited to those including all of the described configurations.

### List of Reference Signs

1: gripper
2a: first rocking shaft (first site)
2b: second rocking shaft (second site)
3: rail
4: slider
5: base
5a: base under surface
6: rack
7: pinion gear
8: vessel (the target)
8a: cylindrical part
8b: bottomed part
8c: step
8z: adjacent vessel
9a: first gripping part
9b: second gripping part
10: hook part
11: gripping part interlocking mechanism
12: drive mechanism
13: motor
14: rotary drive shaft
15a, 15b: rocking shaft hole
16: link frame
16a: top surface
16b: under surface
17: compressed spring
18a: first rocking member
18b: second rocking member
19a: first rocking bearing (first site)
19b: second rocking bearing (second site)
20a: first arm
20b: second arm
21a: first connection shaft
21b: second connection shaft
22a: first connection base portion
22b: second connection base portion
23: connection rod (rod-shaped member)
24a: first connection bearing hole (one end)
24b: second connection bearing hole (another end)
25a: first gripping arm (first gripping part)
25b: second gripping arm (second gripping part)
26a: first recessed surface part (partial cylindrical recessed surface part)
26b: second recessed surface part (partial cylindrical recessed surface part)
27a: first spring receiving part
27b: second spring receiving part
28a: first spring receiving shaft
28b: second spring receiving shaft
29: pull spring (biasing member)
29a: one end
29b: another end
30: cam receiving part
31: cam receiving surface
32: off-center member
33: rotary cam shaft
34: rotary cam
35a: first stopper
35b: second stopper
36: magazine (vessel holding unit)
37a: first gripping part back face (gripping part back face)
37b: second gripping part back face (gripping part back face)
38a: first gripping part side surface (gripping part side surface)
38b: second gripping part side surface (gripping part side surface)
39: straight line
40: vessel insertion hole
41: middle point
42: retaining ring
43a, 43b: rocking shaft hole
101: sample vessel
102: sample transport unit
103: reagent vessel
104: reagent storage unit
105: sample dispensing unit
106: reagent dispensing unit
107: stirring unit
108: reaction promoting unit
109: measurement unit
110: sample spiration position
112: consumable item transport unit
113: controller
114: reaction vessel transport unit
115: washing unit
116: stirring unit
117: disposal hole

## Claims

1. A gripper comprising:
a rod-shaped member that extends in a first direction in a horizontal plane;
a first arm that is pivotally supported at one end of the rod-shaped member, the first arm extending in a second direction different from the first direction in a horizontal plane;
a second arm that is pivotally supported at another end of the rod-shaped member on an opposite side where the first arm is pivotally supported, the second arm extending in a third direction different from the first direction in a horizontal plane;
a first gripping part rotatably formed about a first site that is one end of the first arm where the first arm is not connected to the rod-shaped member, the first gripping part extending in a fourth direction different from the second direction in a horizontal plane; and
a second gripping part rotatably formed about a second site that is one end of the second arm where the second arm is not connected to the rod-shaped member, the second gripping part extending in a fifth direction different from the third direction in a horizontal plane,
wherein when a target is sandwiched by the first gripping part and the second gripping part and the target is gripped, or the gripped target is released, the gripper operates such that a straight line connecting the first site to the second site becomes in parallel with the first direction, the second direction becomes in parallel with the third direction, and the fourth direction and the fifth direction are in point symmetry to the target.

2. The gripper according to claim 1,
wherein the target is gripped at a middle point between the first site and the second site.

3. The gripper according to claim 1,
wherein a relative positional relationship between the first site and the second site is fixed.

4. The gripper according to claim 1, further comprising:
a biasing member that gives biasing force in a direction where the first gripping part and the second gripping part sandwich the target; and
a drive mechanism that gives driving force in a direction where the target gripped by the first gripping part and the second gripping part is released,
wherein the drive mechanism gives the driving force to the rod-shaped member.

5. The gripper according to claim 4,
wherein: the biasing member is a pull spring; and
one end of the pull spring hooked on a first spring receiving shaft provided integrally with the first gripping part and another end of the pull spring hooked on a second spring receiving shaft provided integrally with the second gripping part are stretched in point symmetry to the target.

6. The gripper according to claim 5,
wherein: the drive mechanism includes
a motor including a rotary drive shaft,
a rotary cam provided in parallel with and in off-center to the rotary drive shaft, the rotary cam rotating together with the rotary drive shaft, and
a cam receiving part provided on the rod-shaped member, the cam receiving part being provided orthogonal to the first direction;
when sandwiching the target, the rotary cam separates from the cam receiving part; and
when releasing the target, the rotary cam rotates at a predetermined angle together with the rotary drive shaft, the rotary cam contacts the cam receiving part and moves, and the rod-shaped member is moved to open the first gripping part and the second gripping part.

7. The gripper according to claim 6,
wherein: the rotary drive shaft of the motor is provided in a vertical direction; and
the rotary drive shaft is provided in a range to which a region surrounded by the first site, the second site, one end of the rod-shaped member, and the other end of the rod-shaped member is projected in the vertical direction.

8. The gripper according to claim 7,
wherein from a lowest to above in the vertical direction, the gripper is stacked in an order of the first gripping part and the second gripping part, the biasing member, the rod-shaped member, the rotary cam, and the motor.

9. The gripper according to claim 6,
wherein the motor is a stepping motor, and an opening amount of the first gripping part and an opening amount of the second gripping part are adjustable by increasing and decreasing a number of steps to drive the stepping motor.

10. The gripper according to claim 6,
wherein: the target is a vessel in a bottomed cylindrical shape;
the gripper is capable of gripping and releasing, from a vessel holding unit that places a plurality of the vessels in a grid shape in a direction of an X-axis and in a direction of a Y-axis on a horizontal plane and that perpendicularly holds the plurality of the vessels, a vessel selected from the plurality of the vessels placed on the vessel holding unit by the first gripping part and the second gripping part;
the first gripping part and the second gripping part each include a partial cylindrical recessed surface part facing an outer cylindrical part of the vessel selected in a planar view, a gripping part back face on a side away from the partial cylindrical recessed surface part with respect to the selected vessel, and a pair of gripping part side surfaces connecting the partial cylindrical recessed surface part to the gripping part back face;
a width of the gripping part back face is narrower than the partial cylindrical recessed surface part;
a pair of the gripping part side surfaces are in a nearly trapezoid shape whose width becomes narrower than the selected vessel;
when the first gripping part and the second gripping part are opened, a center axis of the partial cylindrical recessed surface part is located on a symmetric straight line in a direction at an angle of 45° from a center axis position of the selected vessel to the X-axis and the Y-axis; and
the pair of the gripping part side surfaces are located symmetrically to the symmetric straight line, and a predetermined gap is generated between the selected vessel and the plurality of the vessels adjacent to the selected vessel.

11. An automatic analyzer comprising the gripper according to any one of claims 1 to 10.

12. A gripping method for a gripper including
a rod-shaped member that extends in a first direction in a horizontal plane,
a first arm that is pivotally supported at one end of the rod-shaped member, the first arm extending in a second direction different from the first direction in a horizontal plane,
a second arm that is pivotally supported at another end of the rod-shaped member on an opposite side where the first arm is pivotally supported, the second arm extending in a third direction different from the first direction in a horizontal plane,
a first gripping part rotatably formed about a first site that is one end of the first arm where the first arm is not connected to the rod-shaped member, the first gripping part extending in a fourth direction different from the second direction in a horizontal plane, and
a second gripping part rotatably formed about a second site that is one end of the second arm where the second arm is not connected to the rod-shaped member, the second gripping part extending in a fifth direction different from the third direction in a horizontal plane,
wherein: the gripper is configured such that
the first direction becomes parallel with a straight line connecting the first site to the second site,
the second direction becomes parallel with the third direction, and
the fourth direction and the fifth direction are in point symmetry to a target; and
the first gripping part and the second gripping part sandwich the target to grip the target, or the gripped target is released.
